# EUROPEAN PATENT APPLICATION

(11) **EP 3 686 966 A1**
(43) Date of publication of application: **29.07.2020**
(21) Application number: 19153317.3
(22) Date of filing: 23.01.2019
(51) Int. Cl.: H01M 4/131, H01M 4/1391, H01M 4/36, H01M 4/90, H01M 10/052, H01M 10/054, H01M 4/02

(54) **AN ELECTROCHEMICAL ENERGY STORAGE DEVICE AND A METHOD FOR PRODUCING AN ANODE ACTIVE MATERIAL FOR THE ELECTROCHEMICAL ENERGY STORAGE DEVICE**

(71) Applicant: Karlsruher Institut für Technologie, 76131 Karlsruhe (DE)
(72) Inventor: Bresser, Dominic, 89073 Ulm (DE); Ma, Yanjiao, 89075 Ulm (DE); Passerini, Stefano, 89073 Ulm (DE)
(74) Representative: Altmann Stößel Dick Patentanwälte PartG mbB

(57) **Abstract**

The present invention relates to an electrochemical energy storage device, comprising at least one first half cell having a cathode, at least one second half cell having at least one anode, and at least one electrode electrolyte being adapted for providing an ion conducting path between the two half-cells, wherein the anode comprises an anode active material selected from Ce₁₋ₓMₓO₂, wherein M is at least one metal and 0.01 ≤ x ≤ 0.25.

The doping of ceria CeO₂ by the metal M has a highly beneficial impact on the potential use of ceria as the active material for lithium-ion and sodium-ion batteries and allows for capacity increases by a factor of two to three compared to non-doped ceria.

## Description

### Field of the invention

The present invention relates to an electrochemical energy storage device, specifically to an electrochemical energy storage device which comprises an alternative active material for the anode of the electrochemical energy storage device, and a method for producing the alternative anode active material.

### Related art

Modern electrochemical energy storage devices, specifically electrochemical cells such as primary or secondary batteries, which are widely used for storing and/or providing electrical energy from electrochemical reactions, specifically in applications covering various areas including but not limited to portable electronic devices, electric vehicles, hybrid electric vehicles, or stationary energy storage systems, comprise at least one first half-cell having at least one first electrode also denoted as "cathode" and at least one second half-cell having at least one second electrode also denoted as "anode". Further, the electrochemical energy storage device comprises at least one electrolyte being adapted for providing an ionic conducting path between the two half-cells for a transport of ions. For a purpose of avoiding a short circuit, a separator may, additionally, be placed between the two half-cells.

However, in order to further improve their performance, in particular, in electric or hybrid electric vehicles, an increase of both security and performance, the latter specifically with regard to the energy density and/or the power density, is desirable. For this purpose, using an alternative anode material, i.e. an alternative active material for the anode, appears to be promising. Known anode materials, typically, comprise metallic lithium, silicon, silicon oxide, or graphite.

In 2007, F. Zhou, X. Zhao, H. Xu, C. Yuan, CeO2 Spherical Crystallites: Synthesis, Formation Mechanism, Size Control, and Electrochemical Property Study, J. Phys. Chem. C. 111 (2007) 1651-1657. doi:10.1021/jp0660435, investigated CeO₂ spherical crystallites as potential anode material for lithium-ion batteries. Herein, these nanoparticles have been synthesized by a surfactant-assisted hydrothermal method, using poly(vinylpyrrolidone) (PVP) as surfactant. Electrodes based on this active material showed specific capacities of more than 500 mAhg⁻¹, though the discharge/charge potential profile clearly reveals that the major contribution to this capacity is related to a use of an aluminum current collector, since aluminum can electrochemically alloy with lithium in the given voltage window. However, aluminum is not used herein as current collector. Instead, copper, which is electrochemically inert towards lithium in the given voltage window, is commonly used for this purpose.

Subsequently, CeO₂ was studied as a potential anode material for lithium-ion batteries, synthesizing
- core-shell microspheres and/or nanospheres, as reported by H. Liu, H. Liu, X. Han, Core-shell CeO2 micro/nanospheres prepared by microwave-assisted solvothermal process as high-stability anodes for Li-ion batteries, Journal of Solid State Electrochemistry. 21 (2017) 291-295. doi:10.1007/s10008-016-3320-6.);
- microrods, as reported by H. Liu, Q. Le, Synthesis and performance of cerium oxide as anode materials for lithium ion batteries by a chemical precipitation method, Journal of Alloys and Compounds. 669 (2016) 1-7. doi:10.1016/j.jallcom. 2016.01.235;
- microspheres, as reported by X. Huang, H. Liu, J. Liu, H. Liu, Synthesis of micro sphere CeO2 by a chemical precipitation method with enhanced electrochemical performance, Materials Letters. 193 (2017) 115-118. doi:10.1016/j.matlet.2017.01. 090;
- ceria/graphene nanocomposites, as reported by G. Wang, J. Bai, Y. Wang, Z. Ren, J. Bai, Preparation and electrochemical performance of a cerium oxide-graphene nanocomposite as the anode material of a lithium ion battery, Scripta Materialia. 65 (2011) 339-342. doi:10.1016/j.scriptamat.2011.05.001;
- core-shell CeO₂@C nanospheres, as reported by X. Wu, H. Niu, S. Fu, J. Song, C. Mao, S. Zhang, D. Zhang, C. Chen, Core-shell CeO2@C nanospheres as enhanced anode materials for lithium ion batteries, J. Mater. Chem. A. 2 (2014) 6790-6795. doi:10.1039/C3TA15420C;
- carbon-wrapped hollow spheres, as reported by M. Ma, H. Wang, S. Liang, S. Guo, Y. Zhang, X. Du, Porous carbon-wrapped cerium oxide hollow spheres synthesized via microwave hydrothermal for long-cycle and high-rate lithium-ion batteries, Electrochimica Acta. 256 (2017) 110-118. doi:10.1016/j.electacta.2017.10.041; or
- an intercalation compound comprising crystallites as disclosed in US 2007/ 0245546 A1.

The study by Ma et al. indicates an achievement in capacity by introducing substantial amounts of carbon, i.e. more than 50 wt%, to enhance the electronic conductivity, though the required carbon may itself serve as active material in such case. However, the capacity values as reported greatly vary - just like the shape of the corresponding discharge/charge profiles, suggesting that the lithium storage mechanism is, firstly, differing from study to study and, secondly, far from being understood, while, thirdly, the capacity values reported may, in fact, be related to other electrode components such as carbon.

Accordingly, the mentioned studies should be taken with care - not least, as they do not provide any information on the lithium storage mechanism. Further, such high capacities would require an uptake of more than two lithium cations per formula unit, which, however, appears questionable if one assumes an insertion mechanism, as confirmed by the very few studies, which are focused on the investigation of a delithiation/lithiation mechanism. K. Li, X. Zhou, A. Nie, S. Sun, Y.-B. He, W. Ren, B. Li, F. Kang, J.-K. Kim, T.-Y. Zhang, Discovering a First-Order Phase Transition in the Li-CeO2 System, Nano Lett. 17 (2017) 1282-1288. doi:10.1021/acs.nanolett.6b05126; and C. Hua, X. Fang, Z. Yang, Y. Gao, Z. Wang, L. Chen, Lithium storage mechanism and catalytic behavior of CeO2, Electrochemistry Communications. 25 (2012) 66-69. doi:10.1016/j.elecom.2012. 09.030, revealed a reversible lithium uptake of less than 150 mAhg⁻¹, i.e. up to one lithium per formula unit of CeO₂, indicating that lithium is inserted into the CeO₂ crystalline structure without undergoing, e.g., a conversion mechanism.

In addition, the use of metal-doped ceria for other kinds of applications was reported. Such applications comprise
- a use as catalyst for hydrogen production, specifically by Fe doping, as reported in S. Mansingh, D.K. Padhi, K.M. Parida, Enhanced photocatalytic activity of nanostructured Fe doped CeO2 for hydrogen production under visible light irradiation, International Journal of Hydrogen Energy. 41 (2016) 14133-14146. doi:10.1016/j.ijhydene.2016.05.191;
- photocatalysts, specifically by Fe doping, as reported in D. Channei, B. Inceesungvorn, N. Wetchakun, S. Phanichphant, A. Nakaruk, P. Koshy, C.C. Sorrell, Photocatalytic activity under visible light of Fe-doped CeO2 nanoparticles synthesized by flame spray pyrolysis, Ceramics International. 39 (2013) 3129-3134. doi:10.1016/j.ceramint.2012.09.093; and Y. Wang, F. Wang, Y. Chen, D. Zhang, B. Li, S. Kang, X. Li, L. Cui, Enhanced photocatalytic performance of ordered mesoporous Fe-doped CeO2 catalysts for the reduction of CO2 with H2O under simulated solar irradiation, Applied Catalysis B: Environmental. 147 (2014) 602-609. doi:10.1016/j.apcatb.2013.09.036;
- N₂O decomposition as reported in F.J. Perez-Alonso, I. Melian-Cabrera, M. López-Granados, F. Kapteijn, J.L.G. Fierro, Synergy of FexCe1-xO2 mixed oxides for N2O decomposition, Journal of Catalysis 239 (2006) 340-346. doi:10.1016/j.jcat.2006. 02.008;
- a use for oxygen storage, as disclosed in DE 10 2013 008 659 A1, US 2017/ 0346088 A1, and reported by A.B. Kehoe, D.O. Scanlon, G.W. Watson, Role of Lattice Distortions in the Oxygen Storage Capacity of Divalently Doped CeO2, Chem. Mater. 23 (2011) 4464-4468. doi:10.1021/cm201617d; or
- a use as a gas diffusion layer as disclosed in CN 105098199 A.

Further, Bi-doped CeO₂ was reported, e.g., by G. Li, Y. Mao, L. Li, S. Feng, M. Wang, X. Yao, Solid Solubility and Transport Properties of Nanocrystalline (CeO2)1-x(BiO1.5)x by Hydrothermal Conditions, Chem. Mater. 11 (1999) 1259-1266. doi:10.1021/cm9806735, who studied the crystalline structure as a function of the Bi content, the maximum dopant ratio prior to the formation of secondary phases, and the oxygen anion conductivity.

Further, Fe-doped CeO₂ was disclosed in CN 106492812 A, and reported by G. Li, R.L. Smith, H. Inomata, Synthesis of Nanoscale Ce1-xFexO2 Solid Solutions via a Low-Temperature Approach, J. Am. Chem. Soc. 123 (2001) 11091-11092. doi:10.1021/ ja016502+, who studied the distribution of the two cations in the crystalline lattice and the concentration of oxygen vacancies.

Further, CeO₂ doped inter alia with Ti or Nb was reported by Chen Pei-Lin, Chen I-Wei, Grain Growth in CeO2: Dopant Effects, Defect Mechanism, and Solute Drag, Journal of the American Ceramic Society. 79 (1996) 1793-1800. doi:10.1111/j.1151-2916.1996.tb07997.x, who investigated the grain growth depending on the doping agent and its concentration.

Further, Fe/CeO₂ decorated carbon nanofibers (CNFs) was reported for use as a catalyst for supercapacitors applications by Zafar Khan Ghouri, Nasser A. M. Barakat, Al-Mahmnur Alam, Mira Park, Tae Hwan Han, Hak Yong Kim, Facile synthesis of Fe/CeO2-doped CNFs and Their Capacitance Behavior, Int. J. Electrochem. Sci., 10 (2015) 2064 - 2071.

### Problem to be solved

It is therefore an objective of the present invention to provide an electrochemical energy storage device and a method for producing an anode active material for the electrochemical energy storage device, which provide advantageous alternatives to the above-mentioned solutions as known of the state of the art.

It is a particular objective of the present invention to provide an alternative active material for the anode of the electrochemical energy storage device which, on one hand, increases the safety of the electrochemical energy storage device and which, on the other hand, improves the performance of the electrochemical energy storage device, especially with respect to the energy density and, in particular, the power density.

It is a further objective of the present invention to provide an advantageous manufacturing method for producing the alternative anode active material, wherein the method may be operable at low temperatures and moderate pressures.

### Summary of the invention

This problem is solved by an electrochemical energy storage device and a method for producing an anode active material for the electrochemical energy storage device with the features of the independent claims. Preferred embodiments, which might be realized in an isolated fashion or in any arbitrary combination, are listed in the dependent claims.

As used in the following, the terms "have", "comprise" or "include" or any arbitrary grammatical variations thereof are used in a non-exclusive way. Thus, these terms may refer to both a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, as used in the following, the terms "preferably", "more preferably", "particularly", "more particularly", or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in this way with other features of the invention.

In a first aspect, the present invention relates to an electrochemical energy storage device. As described above, the term "electrochemical energy storage device", which may also be denoted by the terms "electrochemical cell" or "full cell", is widely used for storing and/or providing electrical energy from electrochemical reactions which are performed within the electrochemical energy storage device, specifically in applications covering various areas including but not limited to portable electronic devices, electric vehicles, hybrid electric vehicles, or stationary energy storage systems. For this purpose, the electrochemical energy storage device comprises at least one first half-cell comprising at least one first electrode also denoted as "anode" and at least one second half-cell comprising at least one second electrode also denoted as "cathode", wherein the two half-cells are electrically separated from each other in order to avoid a short circuit. As generally used, the term "electrode" refers to an electrically conducting body which is adapted for providing electrical charges, or for withdrawing electrical charges, in particular electrons. Hereby, the "anode" is defined as the type of electrode at which the electrons effect an oxidation of the anode active material whereas the "cathode" is defined as the type of electrode at which electrons are collected, whereby a reduction occurs in the cathode active material. Thus, the anode undergoes a reduction process during charging of the full cell and an oxidization process during discharging of the full cell, respectively. By analogy, the cathode undergoes an oxidization process during charging of the full cell and a reduction process during discharging of the full cell, respectively.

For this purpose, the anode comprises at least one active material denoted as the "anode active material" whereas the cathode comprises at least one active material denoted as the "cathode active material". As generally used, the term "active material" refers to a substance by the respective electrode body which is adapted to be reversibly modified between at least two electronic states, whereby electrochemical energy is converted into electrical energy, or vice versa.

In accordance with the present invention, the anode comprises an anode active material selected from

Ce₁₋ₓMₓO₂,

wherein M is at least one metal and x indicates a partition of Ce which is replaced by the metal M. Thus, in a formal consideration, the metal-doped ceria Ce₁₋ₓMₓO₂ comprises the undoped compound ceria CeO₂ in which a partition x of the Ce is being replaced by the dopant metal M. Not wishing to be bound by theory, the dopant metal M may, for some dopants, take up a place of a Ce in a crystal structure in which the ceria is provided, wherein, however, at least one lattice parameter of the crystal structure may be amended by the incorporation of the dopant metal M. However, for other dopants, the dopant metal M may take up a different place in the crystal structure while the place of the Ce may remain empty, wherein it can reasonably be assumed that the latter process may result in a higher capacity of the anode active material.

In general, any metal M which is capable of being integrated into the crystal structure in which the ceria is provided in this manner can, in principle, be used for the anode active material according to the present invention. In a preferred embodiment, the at least one metal M as comprised by the anode active material may, preferably, be selected from the group consisting of Al, Sc, Ti, V, Cr, Mn, Fe, Co, Ni, Cu, Zn, Ga, Y, Zr, Nb, Mo, Ru, Rh, Pd, Ag, Cd, In, Sn, Sb, Hf, Ta, W, Re, Os, Ir, Pt, Au, Hg, and Bi. In a more preferred embodiment, the metal M as comprised by the anode active material may be selected from the group consisting of Al, Ti, V, Cr, Mn, Fe, Co, Ni, Sn, Cu, Zn, Nb, Mo, In, Sn, W, and Bi. In a most preferred embodiment, the metal M as comprised by the anode active material may be selected from the group consisting of Fe, Co, Bi, Mn, Nb, and Ti. In a particularly preferred embodiment, the metal M as comprised by the anode active material may, as demonstrated below in more detail, be selected from the group consisting of Fe, Co, and Bi.

Similarly, a value for the partition x according to which Ce is replaced by the metal M can, in principle, be selected as long as such an amount of the metal M can be integrated into the crystal structure in which the ceria is provided in the manner according to the present invention as described elsewhere in this document in more detail. Thus, the partition x is selected from 0.01 ≤ x ≤ 0.25, preferably from 0.03 ≤ x ≤ 0.2, more preferred from 0.05 ≤ x ≤ 0.15, in particular approximately 0.07 ≤ x ≤ 0.12, specifically approximately 0.1.

In a preferred embodiment, the electrochemical energy storage device may be an alkali metal-ion battery, particularly selected from a lithium-ion battery (LIB) or a sodium-ion battery (SIB). Herein, the lithium-ion battery comprises a cathode active material which allows generating lithium ions either by applying a voltage or a current to charge the electrochemical energy storage device. As a result, the lithium ions move through the electrochemical energy storage device from the cathode to the anode upon charging and from the anode to the cathode upon discharging of the electrochemical energy storage device, while providing a voltage or current to conduct work. Similarly, the sodium-ion battery comprises a cathode active material which allows generating sodium ions which are adapted to move through the electrochemical energy storage device during charging and discharging thereof. Thus, the cathode active material of the electrochemical energy storage device is selected from a material comprising an alkali metal, in particular lithium or sodium, respectively, which can provide alkali metal ions upon application of a voltage to the electrochemical energy storage device.

In a preferred embodiment, the electrochemical energy storage device may, thus, be a lithium-ion battery (LIB), wherein the cathode active material may, preferably, be selected from layered lithium cobalt(III) oxide (LiCoO₂ (LCO)); spinel lithium manganese oxide LiMn₂O₄ (LMO); a layered lithium nickel manganese cobalt oxide (LiNi_{1-x-y}MnₓCO_{y}O₂ (NMC), wherein x ≤ 1/3, y ≤ 1/3); olivine lithium transition metal phosphate (LiTMPO₄ (LTMP), wherein TM may, preferably, be at least one of Fe, Mn, Co, or Ni); lithium transition metal silicate (Li₂TMSiO₄, wherein TM may, preferably, be at least one of Fe, Mn, Co, or Ni); a spinel lithium manganese nickel oxide, such as Li₁₊ₓMn_{2-y}Ni_{y}O₄ (LMNO), wherein x ≤ 0.3 and y ≤ 0.5); layered lithium nickel cobalt aluminum oxide (LiNi_{1-x-y}CoₓAl_{y}O₂ (NCA), wherein x ≤ 0.25 and y ≤ 0.2); layered lithium nickel dioxide (LiNiO₂); and Li_{1+z}NiₓMn_{1-x-y}Co_{y}O₂ (LR-NMC), wherein x ≤ 0.5, y ≤ 0.2, and z ≤ 0.3), wherein NMC, LCO, LMO, LMNO, NCA, and LTMP are more preferred. However, other kinds of cathode active materials, such as those known by the skilled person, may also be feasible for being used in the electrochemical energy storage device.

In a further preferred embodiment, the electrochemical energy storage device may be a sodium-ion battery (SIB), wherein the cathode active material may, preferably, be selected from sodium analogues of the cathode active materials mentioned above, and other layered sodium transition metal oxides, such as NaₓNi_{y}Fe_{z}Mn_{1-y-z-a}MₐO₂, wherein x ≤ 0.8, y ≤ 0.4, z ≤ 0.3, and a ≤ 0.2; and sodium vanadium phosphates, e.g., Na₃V₂(PO₄)₃, wherein especially layered sodium transition metal oxides and sodium transition metal phosphates are preferred.

In addition, the half-cells may, preferably, be separated by an additional electrically insulating material which is, generally, denoted by the term "separator". For this purpose, the separator may, preferably, be placed between the at least one cathode and the at least one anode. However, in order to simultaneously provide an ion conducting path between the two different types of the electrodes, generally, at least one electrolyte is used, while the resulting electron flow is guided via an outer circuit, connecting the at least two electrodes. Herein, the separator may, preferably, assume the form of a membrane exhibiting a porous composition which is adapted for both receiving and providing the electrolyte and enabling the transport of the ions between the two different types of electrodes.

In a further aspect, the present invention relates to a method for producing an anode active material for the electrochemical energy storage device, in particular for the electrochemical energy storage device as described elsewhere in this document. The method which, may also be denoted by the term "mild hydrothermal synthesis", comprises the following steps a) to d):
a) providing a dopant precursor, wherein the dopant precursor comprises the dopant metal M;
b) dissolving the dopant precursor in an aqueous solvent, whereby a solution is obtained;
c) applying an elevated temperature to the solution; and
d) cooling the solution, whereby a precipitate is obtained, wherein the precipitate is the anode active material comprising Ce₁₋ₓMₓO₂, wherein M is at least one metal and 0.01 ≤ x ≤ 0.25.

Herein, the indicated steps may, preferably, be performed in the given order, commencing with step a) and finishing with step d). However, any or all of the indicated steps may also be repeated several times and/or preformed concurrently in part. Moreover, further steps may, in addition, be performed.

Preferred examples for the dopant precursors which are provided according to step a) are presented in the detailed description of the method below. However, further kinds of dopant precursors may also be applicable. As generally used, the term "dopant precursor" refers to a substance which comprises the dopant metal M, however in a different form compared to the anode active material Ce₁₋ₓMₓO₂.

According to step b), the dopant precursor is dissolved in an aqueous solvent, whereby a solution is obtained. After or during dissolving the dopant precursor, the pH of the obtained solution may be adjusted, specifically to an alkaline pH, preferably at pH ≥ 10, more preferred at pH ≥ 11, most preferred at pH ≥ 12, in particular at pH ≥ 13. For this purpose, an introduction of NaOH or KOH into the solution may be preferred. However, other kinds of alkaline species may also be feasible.

The elevated temperature which is applied to the solution comprising the dissolved dopant precursor according to step c) may, preferably be selected from 100 °C to 300 °C, more preferred from 150 °C to 250 °C, in particular from approximately 200 °C.

According to step d), the mixture may, preferably, be cooled to room temperature, i.e. a temperature of approximately 20 °C to 25 °C.

In a particularly preferred embodiment, the anode active material which comprises the doped ceria compound Ce₁₋ₓMₓO₂ is coated with carbon after step d). For applying the carbon coating, an organic compound, preferably selected from one or more of natural saccharides, such as glucose, sucrose, maltose or cellulose, or a derivative thereof, can be dissolved in a suitable solvent, such as water in the case of glucose or sucrose, or an ionic liquid in the case of cellulose, into which the doped ceria compound Ce₁₋ₓMₓO₂ can be suspended. Based on existing literature about carbon coating precursors, the skilled person can, however, use other majorly carbon-containing organic compounds, such as pitch or polyacrylonitrile. Hereinafter, the obtained suspension can preferably be subjected to a further elevated temperature of 150 °C to 200 °C. A further obtained precipitate which can, in particular, be collected by centrifugation can, preferably, undergo a further drying procedure. Subsequently, the dry precipitate can, in addition, be thermally treated at higher temperature of 250 °C to 600 °C, preferably of 300 °C to 500 °C, in particular of approximately 400 °C, whereby a composite comprising the carbon coated doped ceria compound Ce₁₋ₓMₓO₂ is, finally, obtained.

For further details concerning the method, reference may be made to the detailed description of the method below as well as to the description of the electrochemical energy storage device elsewhere in this document.

Summarizing, the doping of ceria (CeO₂) by the metal M has a highly beneficial impact on the potential use of ceria as the active material for lithium-ion and sodium-ion batteries and allows for capacity increases by a factor of two to three compared to non-doped ceria CeO₂. Moreover, it could be demonstrated that the additional carbon coating process enhanced the available specific capacity, cycling stability, and rate capability for both LIBs and SIBs. Such electrodes have a great potential for high-power batteries, which can be discharged and charged in less than a few minutes.

### Short description of the Figures

Further optional features and embodiments of the invention will be disclosed in more detail in the subsequent description of preferred embodiments, preferably in conjunction with the dependent claims. Therein, the respective optional features may be realized in an isolated fashion as well as in any arbitrary feasible combination, as the skilled person will realize. It is emphasized here that the scope of the invention is not restricted by the preferred embodiments.

In the Figures:
- Figure 1: shows a comparison of an XRD analysis between CeO₂ (state of the art) and Ce₁₋ₓMₓO₂, wherein M is Fe, Co, Bi, Mn, Nb or Ti, respectively;
- Figure 2: shows constant current galvanostatic cycling of electrodes based on CeO₂ (state of the art) and on Ce₁₋ₓMₓO₂, wherein M is Fe, Co, Bi, Mn, Nb or Ti, respectively;
- Figure 3: shows galvanostatic cycling of electrodes based on CeO₂ (state of the art) and on Ce₁₋ₓMₓO₂, wherein M is Fe, Co, Bi, Mn, Nb or Ti, respectively, at elevated specific currents before subsequently decreasing the current back to 100 mAg⁻¹;
- Figure 4: shows a comparison of an *in situ* XRD analysis between CeO₂ (state of the art; Figure 4a) and Ce_{0.9}Fe_{0.1}O₂ (Figure 4b), respectively, upon galvanostatic delithiation/lithiation for two subsequent discharge/charge cycles;
- Figure 5: shows galvanostatic cycling of electrodes based on CeO₂ (state of the art) and on Ce₁₋ₓMₓO₂, wherein M is Fe, Co, Bi, or Nb, respectively, as anode active material for sodium-ion battery applications;
- Figure 6: shows a comparison of an XRD analysis between CeO₂ (state of the art), Ce_{0.9}Fe_{0.1}O₂, and carbon coated Ce_{0.9}Fe_{0.1}O₂-C, respectively;
- Figure 7: shows galvanostatic cycling of electrodes based on CeO₂ (state of the art), on Ce_{0.9}Fe_{0.1}O₂, and on carbon coated Ce_{0.9}Fe_{0.1}O₂-C, respectively, as anode active material for lithium-ion battery applications, applying a constant current (Figure 7a) and at elevated specific currents before subsequently decreasing the current back to 100 mAg⁻¹ (Figure 7b);
- Figure 8: shows galvanostatic cycling of electrodes based on CeO₂ (state of the art), on Ce_{0.9}Fe_{0.1}O₂, and on carbon coated Ce_{0.9}Fe_{0.1}O₂-C, respectively, as anode active material for sodium-ion battery applications, applying a constant current (Figure 8a) and at elevated specific currents before subsequently decreasing the current back to 100 mAg⁻¹ (Figure 8b);
- Figure 9: shows galvanostatic cycling of Li-ion full cells using carbon coated Ce_{0.9}Fe_{0.1}O₂-C as the anode active material and LiNi_{0.5}Mn_{1.5}O₄ (LNMO) as the cathode active material at 20 °C after 10 initial cycles at 1C (1C = 147 mA g⁻¹;) at a voltage range of 1 V to 4.4 V; The capacity values for the Li-ion full cell refer to an amount of active material for the capacity-limiting cathode; and
- Figure 10: shows further experimental results for Li-ion full cells using carbon coated Ce_{0.9}Fe_{0.1}O₂-C as the anode active material and LiNi_{0.5}Mn_{1.5}O₄ (LNMO) as the cathode active material.

### Detailed description of the embodiments

Pure undoped CeO₂, serving as reference as known from the state of the art, and metal-doped CeO₂ having a general composition of Ce_{0.9}M_{0.1}O₂ and M = Fe, Co, Bi, Mn, Nb, and Ti, were synthesized using a mild hydrothermal synthesis. For this purpose, 9 mmol Ce(NO₃)₃·6 H₂O and 1 mmol of a corresponding dopant precursor Fe(NO₃)₃ · 9 H₂O, Co(NO₃)₂ · 6 H₂O, Bi(NO₃)₃ · 5 H₂O, Mn(NO₃)₂ · 4 H₂O, Nb(HC₂O₄)₅ · x H₂O, or C₁₀H₁₄O₅Ti, respectively were dissolved in 75 mL deionized water in a 100 mL Teflon liner, and the solution was stirred for 1 h. Subsequently, 5M NaOH was added dropwise to the solution under continuous stirring to adjust the pH to 13. The resulting solution was further stirred for 1 h and afterwards transferred to a stainless steel autoclave, applying a temperature of 200 °C for 24 h under continuous stirring at 1000 rpm. After cooling to room temperature, the precipitate was washed several times with deionized water and ethanol and dried at 60 °C overnight. The pure undoped CeO₂ was synthesized by the same method without adding any dopant precursor.

For providing a carbon coating, 1.2 g glucose were dissolved in 80 mL deionized water before adding 600 mg of Ce_{0.9}Fe_{0.1}O₂ as the corresponding anode active material under continuous stirring. The obtained suspension was transferred into the stainless steel autoclave and subjected to 180 °C for 13 h under stirring at 1000 rpm) The precipitate was collected by centrifugation, washed several times with deionized water and ethanol, and finally dried at 60 °C overnight. Subsequently, the dry composite was thermally treated at 400 °C for 2 h under argon atmosphere using a heating rate of 3 °C min⁻¹.

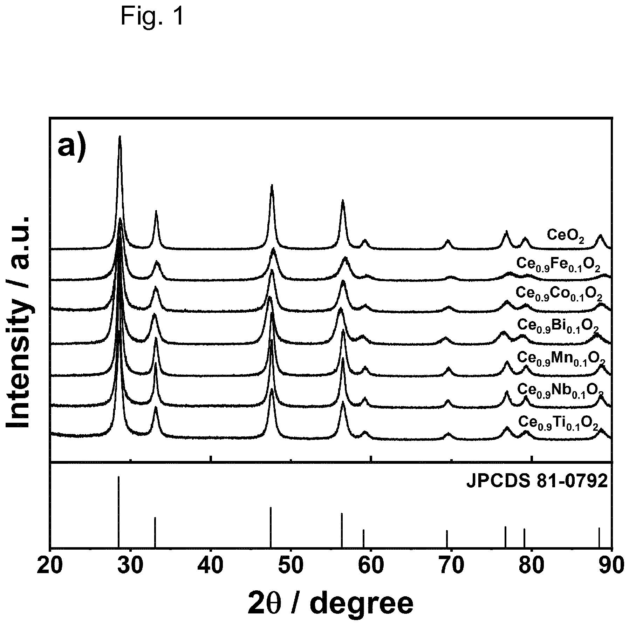

All as-synthesized materials were initially characterized by means of X-ray diffraction (XRD) and transmission electron microscopy (TEM). The diffraction patterns as shown in Figure 1 reveal the successful synthesis of phase-pure materials in all cases, as indicated by the absence of any secondary phases. Moreover, the introduction of the various dopants had a substantial effect on the average crystallite size, as summarized in the following **Table 1:**

| **Table 1** | |
|---|---|
| Anode active material | Average crystallite size |
| CeO₂ (state of the art) | 131 Å |
| Ce_{0.9}Fe_{0.1}O₂ | 82 Å |
| Ce_{0.9}Co_{0.1}O₂ | 88 Å |
| Ce_{0.9}Bi_{0.1}O₂ | 77 Å |
| Ce_{0.9}Mn_{0.1}O₂ | 127 Å |
| Ce_{0.9}Nb_{0.1}O₂ | 197 Å |
| Ce_{0.9}Ti_{0.1}O₂ | 104 Å |

Interestingly, the introduction of Nb leads to a significant increase in crystallite size, while the introduction of all other dopants, in particular of Bi, Co, and Fe, results in a significant decrease in crystallite size.

Further, the TEM micrographs (not depicted here) reveal a synthesis of very fine nanoparticles in all cases with a size of about 8 to 20 nm depending on the dopant nature, which is in very good agreement with the analysis of the crystallite size based on the XRD data. This good agreement clearly indicates that the nanoparticles are single-crystalline.

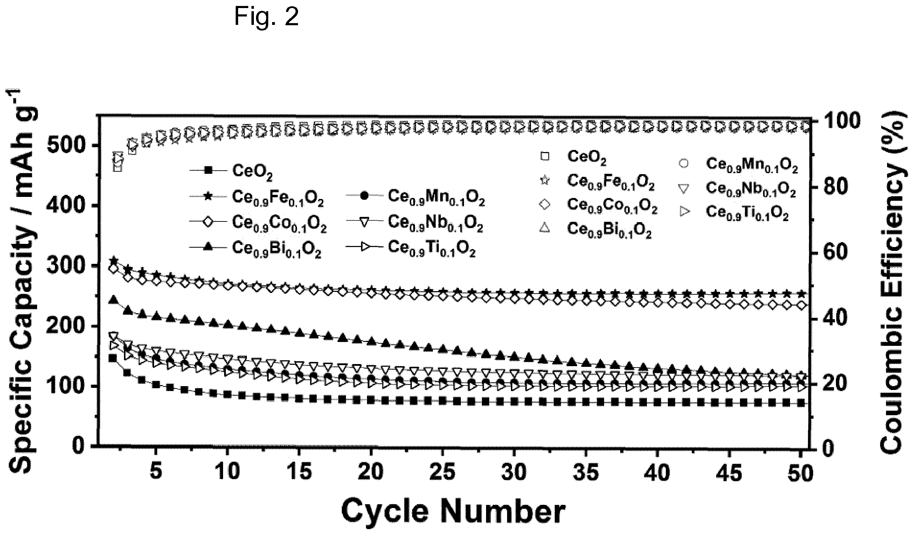

In a next step, electrodes based on the as-synthesized materials were prepared and subjected to galvanostatic cycling. Figure 2 shows that the obtained results reveal that the dopant nature plays a decisive role for the achievable capacity. While generally all Ce_{0.9}M_{0.1}O₂ and M = Fe, Co, Bi, Mn, Nb, and Ti samples show an increased specific capacity compared to pure undoped CeO₂ (state of the art), the highest increase is observed for Ce_{0.9}Bi_{0.1}O₂ and even more for Ce_{0.9}Co_{0.1}O₂ and Ce_{0.9}Fe_{0.1}O₂, showing capacities which are about thrice as high as for pure undoped CeO₂ (state of the art). The applied specific current was 50 mA g⁻¹ while the cut-off voltages were 0.01 and 3.0 V vs. Li/Li+.

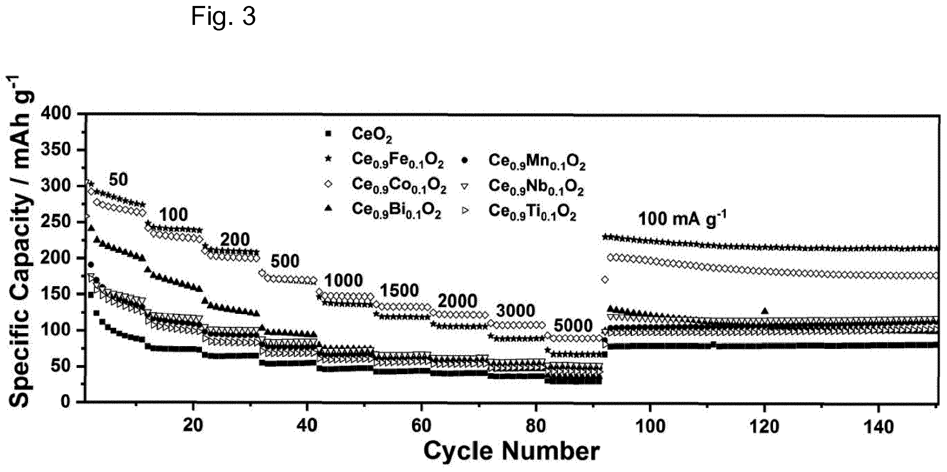

Figure 3 shows that these increased capacities are also maintained when applying elevated specific currents before subsequently decreasing the current back to 100 mA g⁻¹. Particularly for Ce_{0.9}Co_{0.1}O₂ and Ce_{0.9}Fe_{0.1}O₂, the capacities are superior to all other samples across all discharge/charge rates and even for specific currents as high as 5000 mA g⁻¹; these samples still show specific capacities of about 100 mAh g⁻¹. The cut-off voltages were 0.01 and 3.0 V vs. Li/Li+.

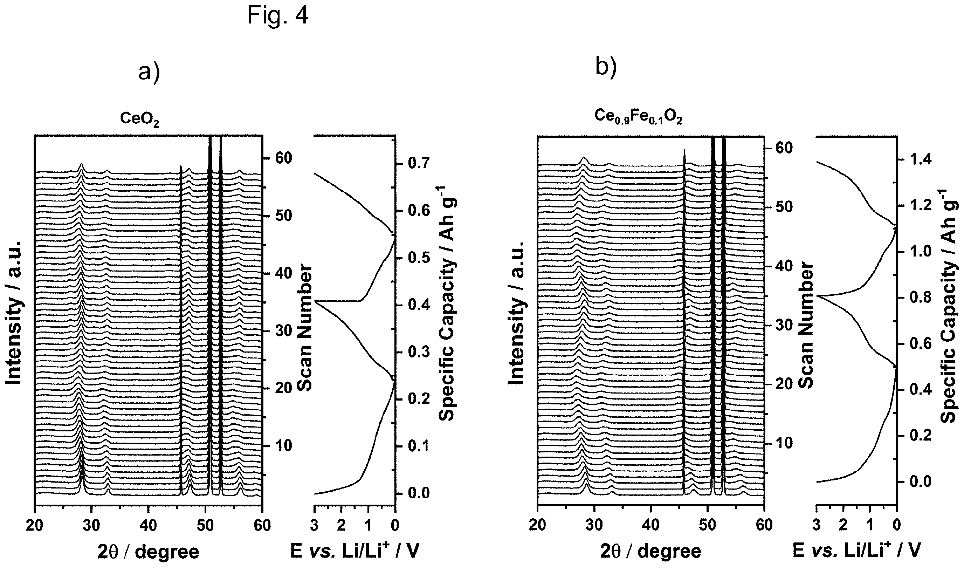

In order to elucidate an impact of the metal dopant on the delithiation/lithiation mechanism and, thus, to understand the dramatically enhanced capacities, an in situ XRD analysis was conducted for pure undoped CeO₂ (state of the art; Figure 4a) and exemplarily for Ce_{0.9}Fe_{0.1}O₂ (Figure 4b). It is apparent that the insertion mechanism, observed for pure undoped CeO₂ (state of the art; Figure 4a), indicated by a continuous shift of reflections to lower 2θ values as a result of the increasing unit cell volume upon lithiation, is well maintained also for Ce_{0.9}Fe_{0.1}O₂ - in fact, much more pronounced (Figure 4b). This increased shift is in excellent agreement with the higher capacities recorded, demonstrating that a higher amount of lithium ions is reversibly inserted. The applied specific current was 50 mA g⁻¹ while the cut-off voltages were 0.01 and 3.0 V vs. Li/Li+.

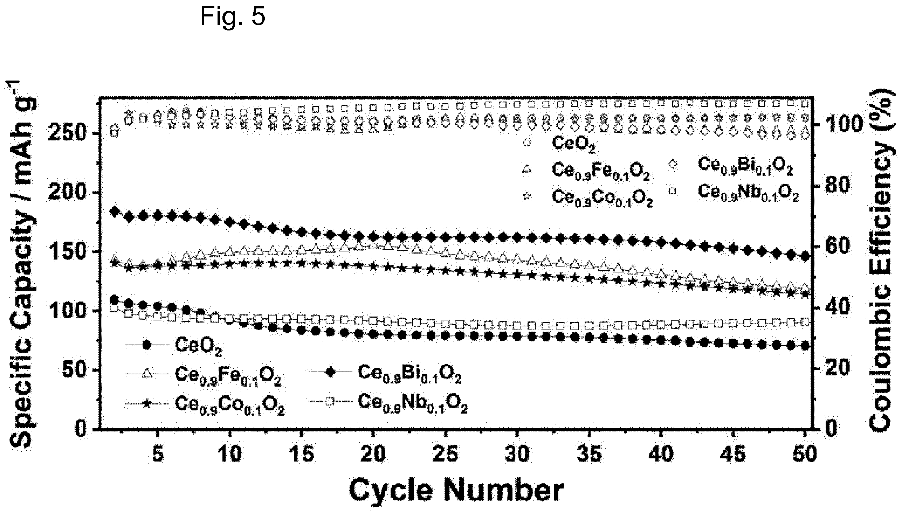

Further, a potential use of Ce_{0.9}M_{0.1}O₂ and M = Fe, Co, Bi, and Nb for sodium-ion battery applications was studied using galvanostatic cycling. As shown in Figure 5, also in this case the incorporation of Fe and Co results in a substantial capacity increase of about 47 mAhg⁻¹ and 43 mAhg⁻¹, respectively, i.e., about 50 % compared to pure undoped CeO₂ (state of the art). In addition, it is remarkable that the Ce_{0.9}Bi_{0.1}O₂ samples reveal further improved capacity values of about twice the value obtained for pure undoped CeO₂ (state of the art). The applied specific current was 50 mA g⁻¹ while the cut-off voltages were 0.01 and 3.0 V vs. Na/Na⁺.

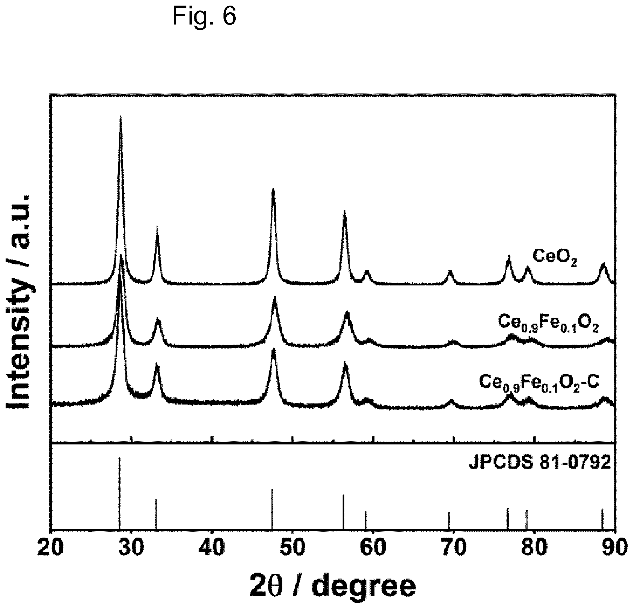

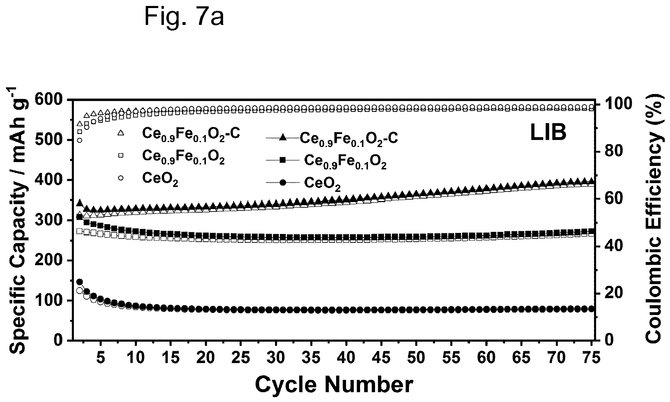

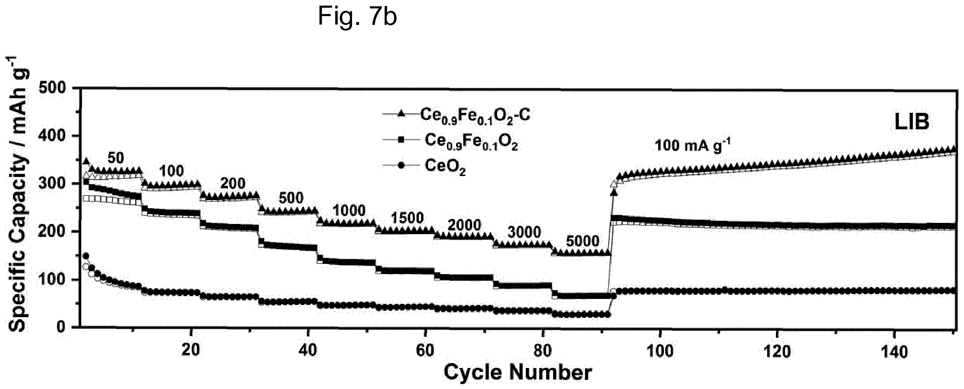

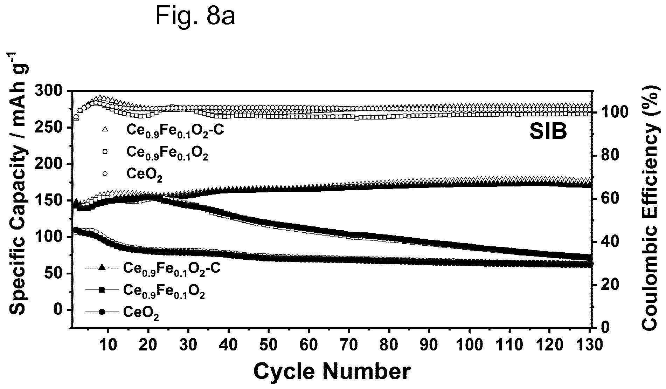

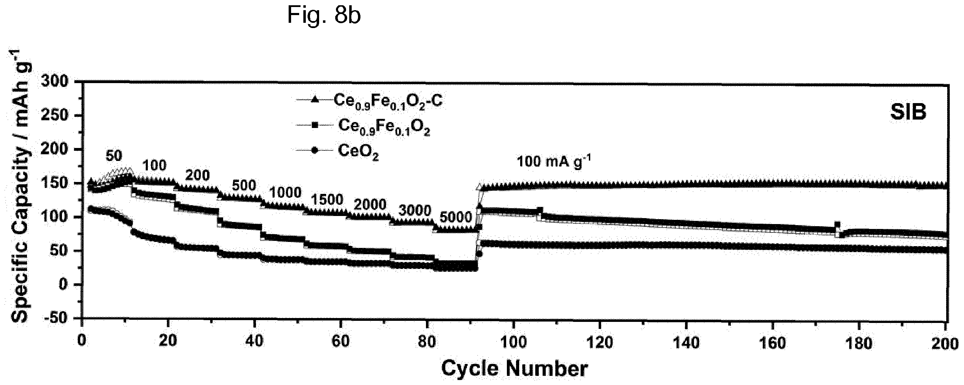

Further, carbon coated Ce_{0.9}Fe_{0.1}O₂-C was synthesized to be investigated for lithium-ion and sodium-ion battery applications. The characterization by XRD as shown in Figure 6 reveals that the application of the carbon coating does not impact the crystal structure while the TEM micrograph (not presented here) shows the presence of a thin, approximately 5 nm thick carbon layer on the Ce_{0.9}Fe_{0.1}O₂-C nanoparticles. Subjecting electrodes based on the carbon-coated anode active material and comparing the data to non-coated samples and pure undoped CeO₂ (state of the art) as a reference illustrates in Figures 7 and 8 a beneficial effect on the achievable capacity at varying discharge/charge rates for both lithium-ion applications and sodium-ion applications.

Figure 7 shows galvanostatic cycling of electrodes based on CeO₂ (state of the art), Ce_{0.9}Fe_{0.1}O₂, and carbon coated Ce_{0.9}Fe_{0.1}O₂-C as the active anion material for lithium-ion battery applications, applying a constant current (Figure 7a) and at elevated specific currents before subsequently decreasing the current back to 100 mA g⁻¹ (Figure 7b). The applied specific current in Figure 7a was 50 mA g⁻¹ while the cut-off voltages in both Figures 7a and 7b were 0.01 and 3.0 V vs. Li/Li⁺.

Similarly, Figure 8 shows galvanostatic cycling of electrodes based on CeO₂ (state of the art), Ce_{0.9}Fe_{0.1}O₂, and carbon coated Ce_{0.9}Fe_{0.1}O₂-C as the active anion material for sodium-ion battery applications, applying a constant current (Figure 8a), and at elevated specific currents before subsequently decreasing the current back to 100 mA g⁻¹ (Figure 8b). The applied specific current in Figure 8A was 50 mA g⁻¹ while the cut-off voltages in both Figures 8a and 8b were 0.01 and 3.0 V vs. Na/Na⁺. In particular, when cycled vs. metallic sodium, the carbon coating moreover supports a substantially improved cycling stability as shown in Figure 8a.

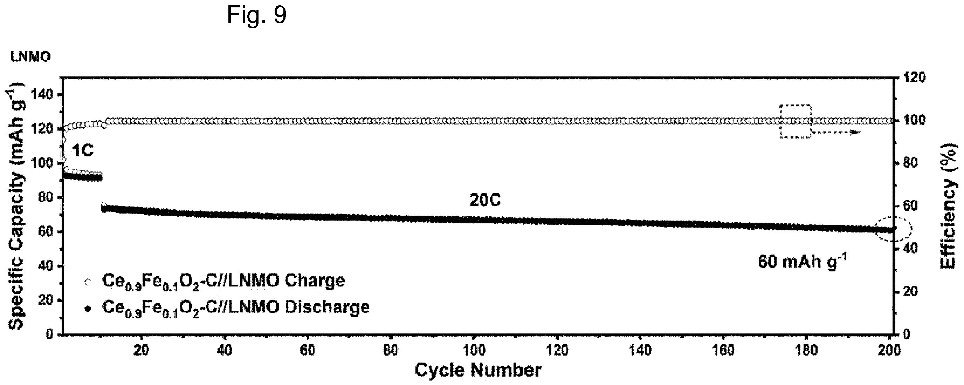

Finally, lithium-ion battery full-cells were assembled using Ce_{0.9}Fe_{0.1}O₂-C as the active anion material and LiNi_{0.5}Mn_{1.5}O₄ (LNMO) as the cathode active material. As shown in Figure 9, such Ce_{0.9}Fe_{0.1}O₂-C/LNMO full-cells, however, not optimized yet, deliver an initial discharge capacity above 90 mAh g⁻¹ versus LNMO in the 10th cycle at 1C in a voltage window of 1 V to 4.4 V. Subsequently, the discharge/charge rate was increased to 20C, resulting in an observation that the cell can be discharged and charged in less than 3 min. At present, the cell is still running, but these preliminary results show the high performance even for such fast discharge/charge rates, providing a high capacity of 60 mAh g⁻¹ after 220 cycles and a coulombic efficiency of about 100%.

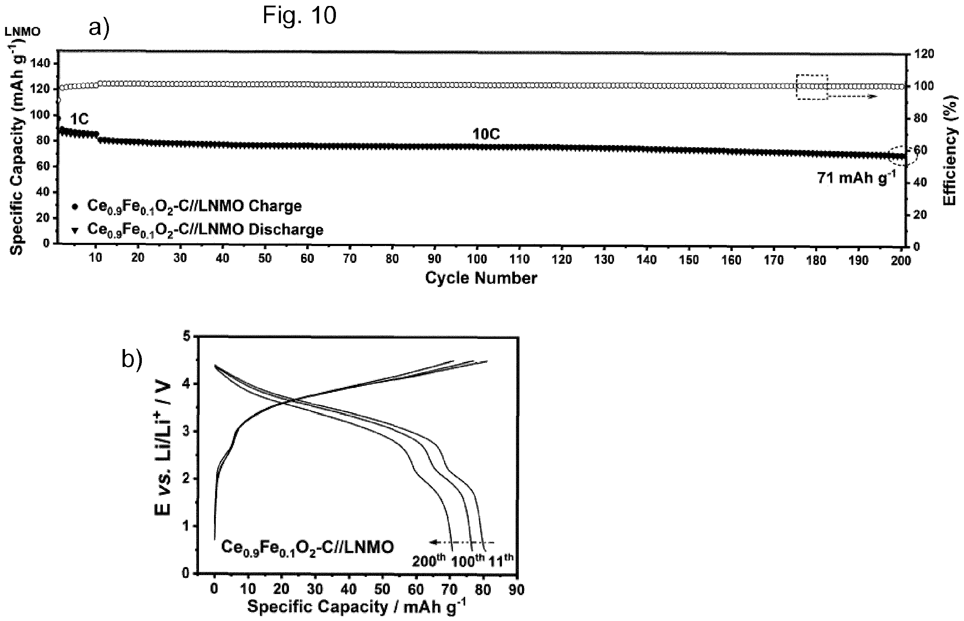

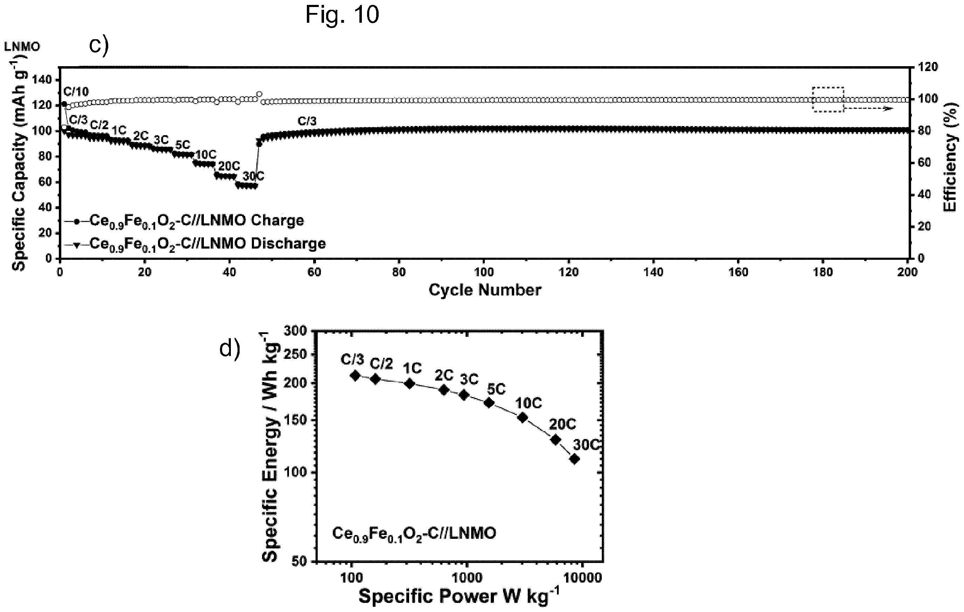

Further results for the lithium-ion battery full-cells comprising Ce_{0.9}Fe_{0.1}O₂-C as the active anion material and LiNi_{0.5}Mn_{1.5}O₄ (LNMO) as the cathode active material are shown in Figure 10. Figures 10a and 10b show respective results of galvanostatic cycling. Figure 10b reveals that the resulting lithium-ion battery is a 3 V full-cell. Based on the results as presented in Figure 10c, Figure 10d displays the resulting specific energy versus the specific power, demonstrating that this full-cell exhibits a combination of high power density at concurrently high energy density.

## Claims

1. An electrochemical energy storage device, comprising at least one first half cell having a cathode, at least one second half cell having at least one anode, and at least one electrolyte being adapted for providing an ionic conducting path between the two half-cells,
**characterized in**
**that** the anode comprises an anode active material selected from Ce₁₋ₓMₓO₂, wherein M is at least one metal and 0.01 ≤ x ≤ 0.25.

2. The electrochemical energy storage device according to the preceding claim, wherein the at least one metal M is selected from Al, Sc, Ti, V, Cr, Mn, Fe, Co, Ni, Cu, Zn, Ga, Y, Zr, Nb, Mo, Ru, Rh, Pd, Ag, Cd, In, Sn, Sb, Hf, Ta, W, Re, Os, Ir, Pt, Au, Hg, and Bi.

3. The device according to the preceding claim, wherein the at least one metal M is selected from Al, Ti, V, Cr, Mn, Fe, Co, Ni, Sn, Cu, Zn, Nb, Mo, In, Sn, W, and Bi.

4. The device according to the preceding claim, wherein the at least one metal M is selected from Fe, Co, and Bi.

5. The device according to any one of the preceding claims, wherein 0.03 ≤ x ≤ 0.2.

6. The device according to the preceding claim, wherein 0.05 ≤ x ≤ 0.15.

7. The device according to the preceding claim, wherein 0.07 ≤ x ≤ 0.12.

8. The device according to any one of the preceding claims, wherein the anode active material is coated with carbon.

9. The device according to any one of the preceding claims, wherein the cathode active material comprises lithium or sodium.

10. The device according to any one of the preceding claims, wherein the cathode active material is selected from at least one of layered lithium cobalt(III) oxide LiCoO₂; spinel lithium manganese oxide LiMn₂O₄; a layered lithium nickel manganese cobalt oxide LiNi_{1-x-y}MnₓCo_{y}O₂, wherein x ≤ 1/3, y ≤ 1/3; olivine lithium transition metal phosphate LiTMPO₄, wherein TM is at least one of Fe, Mn, Co, or Ni; lithium transition metal silicate Li₂TMSiO₄, wherein TM is at least one of Fe, Mn, Co, or Ni; a spinel lithium manganese nickel oxide,; layered lithium nickel cobalt aluminum oxide LiNi_{1-x-y}CoₓAl_{y}O₂, wherein x ≤ 0.25 and y ≤ 0.2; layered lithium nickel dioxide LiNiO₂; and Li_{1-z}NiₓMn_{1-x-y}Co_{y}O₂, wherein x ≤ 0.5, y ≤ 0.2, and z ≤ 0.3.

11. A method for producing an anode active material for the electrochemical energy storage device according to any one of the preceding claims, the method comprising the following steps:
a) providing a dopant precursor, wherein the dopant precursor comprises the dopant metal M;
b) dissolving the dopant precursor in an aqueous solvent, whereby a solution is obtained;
c) applying an elevated temperature to the solution; and
d) cooling the solution, whereby a precipitate is obtained, wherein the precipitate is the anode active material comprising Ce₁₋ₓMₓO₂, wherein M is at least one metal and 0.01 ≤ x ≤ 0.25.

12. The method according to the preceding claim, wherein a pH of the solution obtained in step b) is adjusted to pH ≥ 10.

13. The method according to any one of the preceding method claims, wherein the elevated temperature of step c) is selected from 100 °C to 300 °C.

14. The method according to any one of the preceding method claims, wherein the precipitate of step d) is cooled to room temperature.

15. The method according to any one of the preceding method claims, wherein the anode active material is being coated with carbon after step d).
